(19) **Europäisches Patentamt**

**European Patent Office**

**Office européen des brevets**

(11) **EP 1 197 150 A1**

(12) **EUROPEAN PATENT APPLICATION**

(43) Date of publication:
**17.04.2002 Bulletin 2002/16**

(51) Int Cl.⁷: **A22C 13/00**

(21) Application number: **01308686.3**

(22) Date of filing: **11.10.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Portnoy, Norman Abbye**<br>  **Naperville, Illinois 60565 (US)**<br>• **Escoubas, J.R.**<br>  **Chicago, Illinois 60606 (US)** |
| (30) Priority: **16.10.2000 US 688556** | (74) Representative: **W.P. THOMPSON & CO.**<br>**Eastcheap House** |
| (71) Applicant: **Viskase Corporation**<br>**Willowbrook, Illinois 60527 (US)** | **Central Approach**<br>**Letchworth, Hertfordshire SG6 3DS (GB)** |

(54) **Food casing**

(57)     A tubular, cellulosic food casing has a coating on the inner surface thereof in an amount effective to provide a peelable casing. The coating comprises a water-soluble cellulose ether, a food grade wax and a liquid smoke with a carbonyl content of at least 16% by weight of the liquid smoke.

EP 1 197 150 A1

**Description**

The present invention relates to improvements in the peeling characteristics of cellulosic food casings from the food products formed within the casings, by coating the interior of the casings with liquid smokes containing high carbonyl concentrations. In addition, such coated casings retain commercial qualities needed in shirred sticks of casing.

Nonreinforced cellulose food casings are well known in the art and are widely used in the production of stuffed food products such as hot dogs, and the like. These casings generally are seamless tubes formed of regenerated cellulose made through the well-known 'viscose process', wherein natural cellulose is treated with a caustic solution. This treatment removes certain alkali soluble cellulose-like molecules and further activates the cellulose, thereby permitting derivatization. The resulting alkali cellulose is shredded, aged, and treated with carbon disulfide to form cellulose xanthate, a caustic, soluble, cellulose derivative, which is then dissolved in a weak caustic solution to form viscose. This 'viscose' is further finished and processed by extrusion through an annular die, thus forming tubular films and thereby casings. These derivatized or regenerated casings are then treated with a plasticizer such as water, and/or a polyol such as glycerin, which reduces the brittleness of the cellulose tube and makes it easy to handle in commercial use.

An alternate cellulose casing production method involves forming a cellulose solution by means of a simple dissolution, instead of a derivatization of the cellulose molecules, as described in US-A-2179181. Natural cellulose is dissolved by a tertiary amine N-oxide to produce cellulose solutions, without the need for derivatization. US-A-3447939 discloses the use of N-methyl-morpholine-N-oxide ("NMMO") as the cyclic amine solvent that can be used in this process to ultimately form a film or filament. U.S. Statutory Invention Registration No. H1592 describes this process in detail and the totality of which is incorporated herein by reference. Other alternative methods for the production of cellulosic casings involve the direct dissolution of the cellulose in an organic solvent such as $N_2O_4$/DMF or LiCl/DMF, in an inorganic acid such as $H_3PO_4$ or $ZnCl_2$, or in an inorganic complexing reagent such as copper, iron, or cadmium complexes. The film or tube is generally ultimately formed by extrusion through annular dies. Tubes can be processed into casings, used in particular for the production of sausages.

The designations of derivatized or nonderivatized casings herein shall refer to the viscose- and NMMO-produced cellulosic casings respectively.

Following extrusion, the tube is generally washed free of the chemicals that are attendant to the dissolution and regeneration process and then are treated with processing aids, additives, or coatings to enhance food processing characteristics. For example, humectants such as glycerin and the like are added; colorants are incorporated in or on the casings to make self-coloring casings that transfer the color during processing of the food product; and a smoky flavor can also be transferred to the food product under certain conditions when liquid smokes are incorporated in or coated on the casings.

Casing is generally reeled, and then shirred, or pleated mechanically, into sticks of about 30-46 cm (12-18") long, containing from about 25 to about 69 m (84-225 feet) of casing. These 'shirred' casing sticks are handled by the ultimate user, the sausage maker or meat packer, much more conveniently than non-shirred casing.

Casings are used for the production of skinless sausages such as hot dogs. Emulsified meat is stuffed into a casing, which is twisted at intervals to form the sausages. The linked sausages are cooked and smoked either with or without acidification, to flavor, denature and coagulate the protein in the outer layer of the sausage, and then cooled to set the coagulated protein. The cooked, smoked sausages are then showered to humidify them fully and relax the skin, which is then stripped off, leaving firm, skinless sausages.

One common step included in the hot dog manufacturing process is smoking the links. Smoking of hot dogs can be done by generating the smoke *in situ* by burning hardwoods and directing the resultant smoke over to the hot dogs during cooking, or by drenching or spraying the encased hot dogs with a commercial liquid smoke. Commercial liquid smokes are produced by burning hardwoods and capturing the gaseous effluent in water to produce an aqueous smoke composition. Regardless of the production method, there are three basic chemical components of smoke: phenols, acids, and carbonyls. The phenols are flavoring agents and impart a characteristic smoky flavor to the food product; the acids, which are acetic and formic, denature the outermost layer of meat emulsions and thus form a tough skin on the food product; and the carbonyls are known to be coloring agents reacting through the Maillard Reaction with the protein of the meat emulsion.

It has been found that when the casing is peeled from the cooked sausages, the meat may adhere to the casing during the stripping step and is pulled away, resulting in a commercially unacceptable scarred product. Peeling aids that allow the casing to be completely stripped off the cooked sausages, without causing damage to any of the sausages, are an important component of commercial casings. It is also important that the shirred, coated, casing stick retains all characteristics, such as the cohesiveness, sizing, and breakage of the stick, needed for handling by commercial production houses.

While it is well known that peeling aids do improve the peelability of most casings, no one particular peeling aid can be used for all situations. Other factors, such as the type of meat emulsion used to make the sausages, will affect the peelability of the casing, and therefore dictate the type of peeling aid to be used on the casing.

Certain release agents for cellulose sausage casings are well known in the art. Examples include the use of sugars, as in US-A-3533808; the use of mineral oil, lecithin, water-soluble cellulose ether, and surfactant, as in US-A-5230933; carboxymethyl cellulose, as in US-A-3898348 and US-A-4596727; alkyl ketene dimers, as described in US-A-3905397; and fatty acid chromyl chlorides, disclosed in US-A-2901358. It is also reported that nonfibrous casings treated with a liquid smoke, such as a concentrated, acidic, tar-depleted liquid smoke in accordance with the teachings of US-A-4540613, have undesirable low peelability on high speed peelers when processed with an acid shower treatment, as described in US-A-5230933, and which is incorporated herein by reference in its entirety.

Unfortunately, many commercial sausage manufacturers will only use casings that have approximately 100% peelability, leaving them with no or a minimum of scrap product.

In addition to peelability, other stick properties, such as coherency, are affected by the peeling aids coated on the casing. Shirred casing sticks must retain their coherency in order to be able to be used on stuffing machines.

Therefore, the present invention seeks to provide a tubular, cellulosic casing coated with a peeling aid that allows for the ready peeling of the casing from a cooked meat or food product with a mechanized sausage peeling machine to the degree required by commercial manufacturers of cooked food products.

This invention also seeks to provide a tubular, cellulosic, casing coated with the peeling aid described above and which retains its coherency, allowing it to be readily deshirred.

Objects and advantages of this invention will become apparent from the present disclosure.

It has now been unexpectedly found that tubular cellulosic casings may be made to incorporate a peeling aid that provides for the ready mechanical peeling of these casings from cooked food products and, in particular, from cooked meat emulsions. The resulting casing exhibits high levels of peeling from cooked hot dogs, for example.

The peeling aid composition according to the present invention comprises a liquid smoke with a high carbonyl content, applied by drenching onto the stuffed casing or sprayed directly into the casing with the shirring solution. Preferably, the composition also includes a food grade wax and a water-soluble ether. This composition may also include an anti-pleat lock agent, such as an oil, and a surfactant. Other typically employed casing additives are known to the art and may include, for example, humectants, antimycotics, lubricants, and antioxidants. Regardless of the method of application of the high carbonyl liquid smoke, the other components of the shirring solution are applied to the interior of the casing during shirring by spraying on the interior of the casing.

The tubular, cellulosic food casing according to the present invention comprises a cellulosic casing having a coating on the inner surface thereof, in an effective amount to provide a peelable casing wherein said coating comprises a liquid smoke with a high carbonyl content. Preferably, the coating composition additionally comprises a water-soluble cellulose ether and a food grade wax. This casing is readily peelable by commercial high speed peeling machines. Other components, such as the additives described above, may be included in the peeling aid composition.

The invention is a novel, tubular, cellulosic food casing coated with a solution comprising a high carbonyl content liquid smoke, and additionally may contain other additives useful in the shirring process. The food casings of the present invention may be prepared from tubular casing made as described above. These casings are typically gathered into shirred sticks, using well known processes and equipment. During shirring, it is common to coat the casing, particularly the inner surface, by spraying with a shirr solution. Shirr solutions may contain ingredients such as anti-pleat lock agents, lubricants, surfactants, water and/or humectants, and are well known to those skilled in the art. This coating is done to facilitate travel of the casing over a shirring mandrel or stuffing horn. Coating with a shirr solution also facilitates shirring of the casing to form easily deshirrable, self-sustaining sticks of shirred casing that are adapted for stuffing with food products, such as meat emulsions that form sausages.

Coatings may also be applied by the well known methods of dipping and slugging and drenching, but the application of other additives and coating compositions via shirr solution spraying is convenient, economical and facilitates placement of a regular measured distribution of a coating on the casing surface. Casings made according to the present invention are preferably coated with the inventive release mixture by spraying on as the shirring solution.

The present invention provides a tubular, cellulosic casing having a coating on the inner, food-contacting surface, where the coating is a release agent that allows the treated casing to be peeled off the surface of fully processed food products, to a commercially acceptable level, by a mechanized peeler. The use of this inventive casing results in a high percentage of commercially acceptable sausages. Surprisingly, the release agent of the present invention is an additive well known for imparting a smoky taste and a reddish color to processed hot dogs and other sausages, liquid smoke. The liquid smoke of the present invention contains a high carbonyl content as compared to a variety of commercially available liquid smoke solutions.

The preferred tar-depleted liquid smoke treated casing is preferably made using a tar-depleted concentrated liquid smoke, such as those made by the Red Arrow Products Co., Inc. of Manitowoc, Wisconsin, USA. Liquid smoke is a complex mixture of solid materials and/or water soluble materials. The most prominent of these are phenolics, carbonyl compounds, and acetic and formic acids. Thus, liquid smoke can be differentiated by the levels of carbonyls, for example. It is known that the carbonyl fraction, via the Maillard Reaction, determines the level of coloring that accompanies the smoking process, with the higher the carbonyl concentration, the deeper the color on the finished sausage or hot dog. In a preferred embodiment of the present invention, the peeling aid or release agent is liquid smoke containing at least about 16.0% carbonyl and preferably at least about 19% carbonyl, and is used to coat the cellulosic casing. (Throughout this specification, all percentages are by weight unless otherwise indicated. The carbonyl content is by weight of the liquid smoke, as measured by the methyl ethyl ketone or MEK, test procedure.) The percentage by weight of carbonyl in the liquid smoke is measured by the following MEK test procedure.

Prepare alcoholic potassium hydroxide by dissolving 20 g potassium hydroxide in 40 ml deionized water and dilute to 200 ml with methanol.

Prepare the Color Reagent by dissolving 1 gram of 2,4 dinitrophenyl hydrazine in about 100 ml methanol while heating. Cool and wait for precipitation of crystals. Filter to collect crystals and dissolve them in about 300 ml methanol while heating. Cool and let crystals precipitate.

Prepare standard stock solution by diluting 1 ml of methyl ethyl ketone (80% 2-butanone) to 200 ml with deionized water.

Mix together 5 ml. of Color Reagent, 5 ml of sample, and 1 drop of concentrated hydrochloric acid. Digest for 30 minutes in a 55°C water bath. Cool with ice for about 5 minutes and then add 5 ml alcoholic potassium hydroxide. Shake and let stand for 30 minutes. Zero the spectrophotometer with a water blank at 480 NM. Read the samples and prepared standards and calculate the standard curve and determine the parts per million of the samples with the following equation:

$$\frac{(\text{ppm of sample})(500 \text{ ml distillate})(100)}{(1000)(\text{gram product distilled})} = \text{mg butanone/100 g product}$$

The concentration of the high carbonyl liquid smoke present on the internal surface of the food casing ranges from about 10 mg./645 $cm^2$ (100 square inches) to about 250 mg./645 $cm^2$ (100 square inches) of coated casing surface. A preferred concentration is from about 40 mg./645 $cm^2$ (100 square inches) to about 150 mg./645 $cm^2$ (100 square inches) of coated casing surface.

A second component may be added to the release or peeling composition, that is, a water-soluble cellulose ether. Typical water-soluble cellulose ethers that may be used are the nonionic water-soluble alkyl and hydroxyalkyl cellulose ethers such as, methylcellulose, hydroxypropyl methylcellulose, hydroxypropylcellulose, ethyl methylcellulose, hydroxyethylcellulose and ethyl hydroxyethylcellulose, and preferably the anionic water-soluble cellulose ethers such as, carboxymethylcellulose and carboxymethylhydroxy-ethylcellulose. Mixtures of nonionic and anionic water-soluble cellulose ethers may also be used. Commercially, carboxymethylcellulose ("CMC") and carboxymethylhydroxy-ethylcellulose are almost always sold as the sodium salt, and it is well established trade practice not to refer to the commercial product as the sodium salt. For the purpose of this application, reference to these anionic materials shall include salts thereof, e.g., the sodium salt and other alkali metal salts thereof.

The amount of water-soluble cellulose ether present on the internal surface of the food casing can vary over a wide range, although very small quantities are actually required. In general, cellulosic casings of the present invention will contain from about 2 to about 10 mg. of cellulose ether/645 $cm^2$ (100 square inches) of casing surface, and preferably between from about 2.5 to about 7.5 mg./645 $cm^2$ (100 square inches) of said cellulose ether. Greater amounts of the cellulose ether component may be used, if desired, although generally it will not materially improve the release characteristics of the casing.

A third component of the release composition is a food grade wax. Examples of food grade waxes include water-soluble, physiologically harmless, high molecular aliphatic hydrocarbons, such as paraffin wax, as described in GB723323B, or oxazoline wax as described in US-A-4163463, both of which are incorporated by reference herein. The preferred embodiment of the present invention uses carnuba wax, a wax well known in the art, in concentrations of from about 5 mg./645 $cm^2$ (100 square inches) to about 30 mg./645 $cm^2$ (100 square inches) of coated casing surface. A particularly preferred concentration of carnuba wax is from 8 mg./645 $cm^2$ (100 square inches) to about 19 mg./ 645 $cm^2$ (100 square inches) of coating casing surface.

Anti-pleat lock agents are materials that are capable of promoting deshirring of pleats by minimizing any tendency of the pleats of a shirred casing stick to unduly adhere to each other and thereby damage the casing by creation of pinholes, tears or breaks during deshirring and stuffing. The anti-pleat lock agents will preferably be effective in the presence of a water soluble cellulose ether, which is known to promote adhesion of pleats. Some anti-pleat lock agents suitable for use in admixture with the release composition or mixture include synthetic, natural, and modified oils, including mineral, vegetable, and animal oils, food grade mineral oil, silicone oils and medium chain triglycerides.

Another additive that is well known to those skilled in the art is lecithin, a natural phospholipid derived from plants and animals. Although lecithin is an additive that is useful in derivatized casings, it has been found to reduce the cohesiveness of nonderivatized casing sticks, and therefore can be used only in very small amounts, if at all in nonderivatized casings.

Surfactants may also be added to the release or peeling composition. Suitable surfactants include water dispersible or at least partially water dispersible surfactants such as alkylene oxide adducts of either fatty acids or partial fatty acid esters, ethoxylated fatty acid partial esters of polyols such as anhydrosorbitols, glycerol, polyglycerol, pentaerythritol, and glucosides, as well as ethoxylated monodiglycerides, sorbitan trioleate, and aliphatic polyoxyethylene ethers such as polyoxyethylene (23) lauryl ether. Some well known brand names of surfactants include "Tween® " (sold by ICI Americas of Wilmington, Delaware) and "Mazol® " (sold by Mazur Chemical, Inc. of Gurnee, Illinois). Especially preferred is Mazol® 80 MGK, a mixture of ethoxylated mono- or diglycerides.

An effective shirring solution that enhances the peeling or release characteristics of cellulosic food casings has a formula which results in the inner surface of the casing being coated with from about 2 mg. to about 10 mg./645 cm$^2$ (100 square inches) of casing surface of water-soluble cellulose ether, from about 5mg. to about 30 mg./645 cm$^2$ (100 square inches) of casing surface of food grade wax, and from about 10 mg. to about 250 mg./645 cm$^2$ (100 square inches) of casing surface of high carbonyl liquid smoke. A preferred shirring solution contains from about 4.0 mg. to about 8.0 mg/645 cm$^2$ (100 square inches) of casing surface of water-soluble cellulose ether, from about 8mg. to about 18 mg./645 cm$^2$ (100 square inches) of casing surface of carnuba wax, and from about 50 mg. to about 150 mg./645 cm$^2$ (100 square inches) of casing surface of high carbonyl liquid smoke. Such solution is typically applied by being sprayed on the inner surface of the casing as it is being shirred, thereby producing a tubular, cellulosic food casing having a coating on the inner surface thereof in an effective amount to provide a peelable casing wherein said coating comprises a composition of a water-soluble cellulose ether, a food grade wax, and a liquid smoke with a high carbonyl content. The carbonyl content of this liquid smoke is at least about 16%.

The invention will become clearer when considered together with the following examples, which are set forth as being merely illustrative and are not intended to be limiting.

EXAMPLES 1-20

These examples determined the percentage of carbonyl component of liquid smoke needed to improve the peeling characteristics of cellulose casings from processed food products, such as hot dogs. In this set of experiments, various smokes with different carbonyl levels were screened to determine the effect of high levels of carbonyl compounds in the liquid smoke had on peeling properties. Liquid smokes with various acid, carbonyl, and surfactant properties were used to determine the best compositions for this purpose.

Casings of nonderivatized cellulose were produced in a pilot plant facility essentially as described in U.S. Statutory Invention Registration H1592. These casings had a flat width of about 3.25 cm (1.31 inches) and the interior of the casings were sprayed with a shirring solution comprised of 7.2 mg. of CMC, 160 mg. of carnuba wax, 24 mg. of deionized water, 89 mg. of propylene glycol, and 1 mg. of Mazur 210 DS (obtained from PPG Industries, Gurnee, Illinois, USA). In the shirred sticks, approximately 26 m (84 feet) of casing was reduced to a 30 cm (12") stick by mechanical pleating. The shirred sticks were held for five days at ambient conditions to allow the shirring solution to completely equilibrate within the sticks and to absorb the maximum amount of liquid. Following this holding period, the sticks were stuffed with a hot dog meat emulsion prepared from a formulation containing beef and pork trimmings and a high content of collageous materials and linked into about 188 hot dogs per shirred stick. After the hot dogs were made, they were drenched for 75 seconds in one of 8 tubs containing one of eight various liquid smokes. Care was taken to apply the liquid smoke as uniformly as possible. They were then placed in a smokehouse for approximately 30 minutes during which time the temperature of the smokehouse was increased from about 60 deg C (140 deg. F) to about 82 deg C (180 deg. F), while maintaining a relative humidity of about 20%. The 82 deg C temperature and 20% relative humidity was maintained until the internal temperature of the encased hot dogs reached 71 deg C (160 deg. F), whereupon the encased hot dogs were removed from the smokehouse and showered with tap water for ten minutes. They were then removed from the smokehouse and chilled in a brine shower for an additional ten minutes, whereupon they were placed in a tray with ice water and fed into a mechanical high speed peeling machine to remove the casing from the cooked hot dogs. Results are shown in Table 1. Peelability is reported as a percent of the number of hot dogs that peeled relative to the total number of hot dogs subject to the peeling operation. For example, 100% denotes that the entire casing was peeled from all hot dogs and the peeled casing was free of meat.

Although there were other variables in these experiments, it is evident from the data that the highest levels of peeling for these samples occurred when the carbonyl content of the liquid smoke was the highest.

Table 1.

| EXPT. NO. | % CARBONYL | % PEELING |
|-----------|-----------|-----------|
| 1 | 12.7 | 17.0 |
| 2 | 22.4 | 93.0 |

Table 1. (continued)

| EXPT. NO. | % CARBONYL | % PEELING |
|---|---|---|
| 3 | 10.2 | 7.5 |
| 4 | 30.4 | 90.3 |
| 5 | 10.0 | 40.7 |
| 6 | 19.5 | 96.1 |
| 7 | 11.6 | 69.6 |
| 8 | 14.1 | 17.0 |
| 9 | 10.2 | 7.1 |
| 10 | 30.4 | 88.0 |
| 11 | 11.6 | 71.7 |
| 12 | 10.0 | 50.9 |
| 13 | 12.7 | 4.4 |
| 14 | 10.2 | 1.7 |
| 15 | 22.4 | 92.8 |
| 16 | 11.6 | 43.6 |
| 17 | 30.4 | 92.0 |
| 18 | 19.5 | 38.7 |
| 19 | 10.0 | 19.4 |
| 20 | 14.0 | 65.3 |

These results indicate that liquid smokes with higher carbonyl levels resulted in better peeling than those with lower carbonyl levels. In particular, higher carbonyl levels means liquid smoke formulations with at least about 16% and preferably at least about 19% carbonyl content.

EXAMPLES 21-25

The method of Examples 1-20 was followed with the exception that the liquid smoke formulations of examples 2, 4, 10, 15 and 17 were diluted to contain concentrations of 7.1% and 7.7% of carbonyl, rather than the original 19.3 to 30.0%. The resultant hot dogs had peeling levels of 22.1% and 7.8% respectively, as seen in Table 2, showing that higher levels of carbonyls as seen in examples 2, 4, 10, 15 and 17 are needed in the liquid smoke formulations to give acceptable peeling results.

Table 2

| Example No. | % Carbonyl | % Peeling |
|---|---|---|
| 21 | 7.1 | 22.1 |
| 22 | 7.7 | 7.8 |
| 23 | 7.7 | 7.8 |
| 24 | 7.1 | 22.1 |
| 25 | 7.7 | 7.8 |

EXAMPLES 26-41

Various carbonyl components either extracted directly from the liquid smoke manufacturing process or known to be in major proportions in commercial liquid smoke formulations were added in various concentrations, as shown in Table 3, to standard shirring solutions, which were then used to coat casings as they were being shirred.
One method of preparing such a standard shirring solution is the following: Mix about 4% of CMC with deionized water in a blender at high speed for approximately 3 minutes, then add about 21% of propylene glycol, about 4% of carnuba wax, and about 0.2% of a defoamer to the CMC solution, stirring for about 5 minutes. Next, add about 17% of the liquid smoke to the solution, mixing at high speed for an additional 5 minutes.
The shirred casings were then prepared (and sprayed with the shirring solution) as described in Examples 1-20. Hot dogs were then made by the method in Examples 1-20 and drenched with Red Arrow® 23p liquid smoke (purchased from Red Arrow Products Company, Inc., located in Manitowoc, Wisconsin, USA). The hot dogs were then cooked and peeled as per the method of Examples 1-20.

The results are shown in Table 3. From these results it can be seen that high carbonyl-containing liquid smoke is equally effective when it is shirred into the casing and the casing is then drenched with a lower carbonyl-containing liquid smoke as compared to when the higher carbonyl-containing liquid smoke is used only in drenching the casing. These results also show an unexpected synergy between the carbonyls and other components of the liquid smoke. Alpha-hydroxy acetaldehyde ("AHA") and a high carbonyl fraction ("HCF") were both distilled from the process used to produce liquid smoke. Experiments that used only either AHA or HCF in the shirring solution used on the test casing showed no improvement in the peeling of the casing from the hot dogs. However, a dramatic improvement in peelability was seen under similar conditions where high carbonyl liquid smoke ("SMK4") was used as a peeling additive.

Table 3 *

| No. | Carbonyl/amt. | CMC | Carnuba | % Peeling |
|---|---|---|---|---|
| 26. | 0 | 4.2 | 16 | 73.2 |
| 27. | 0 | 7.2 | 16 | 12.0-84.5** |
| 28. | 0 | 4.2 | 8 | 45.9 |
| 29. | 0 | 7.2 | 8 | 32.4 |
| 30. | AHA/25 | 4.2 | 16 | 39.2 |
| 31. | AHA/50 | 7.2 | 8 | 68.0 |
| 32. | AHA/50 | 4.2 | 16 | 24.1 |
| 33. | HCF/50 | 4.2 | 8 | 53.3 |
| 34. | HCF/50 | 4.2 | 16 | 8.3 |
| 35. | HCF/100 | 4.2 | 8 | 0.0 |
| 36. | HCF/100 | 7.2 | 16 | 0.3 |
| 37. | SMK4/25 | 4.2 | 8 | 100.0 |
| 38. | SMK4/100 | 7.2 | 16 | 99.4 |
| 39. | SMK4/100 | 7.2 | 8 | 93.1 |
| 40. Derivatized Casing EZ-PEEL[1] | - | - | - | 99.8 |
| 41. Derivatized Casing HYDROFLEX[2] | - | - | - | 4.3 |

* = All components are shirred into the casing, amounts are in units of mg./645 cm$^2$ (100 square inches) of coated casing surface.

** = this entry represents multiple runs. It should be recalled that 84% is not quite unacceptable. Levels of greater than 99.5% are routinely expected and obtained in the field.

[1] = Commercial casing, registered trademark of and sold by Viskase Corporation, Chicago, Illinois, USA, coated with peeling agents not of the present invention.

[2] = Commercial casing, registered trademark of and sold by Viskase Corporation, not containing any peeling agents.

**Claims**

1.   A tubular, cellulosic food casing having a coating on the inner surface thereof in an amount effective to provide a peelable casing wherein said coating comprises a liquid smoke with a carbonyl content of at least 16% by weight of the liquid smoke.

2.   A casing as claimed in claim 1, wherein said coating further comprises a water-soluble cellulose ether and a food grade wax.

3.   A casing according to claim 1 or claim 2, wherein said carbonyl content is at least 19% by weight of the liquid smoke.

4.   A casing according to any preceding claim, wherein said water-soluble cellulose ether is selected from the group consisting of methylcellulose, hydroxyethylcellulose, carboxymethyl hydroxymethylcellulose, hydroxypropylcellulose, hydroxypropyl methylcellulose, carboxymethylcellulose and salts thereof.

5. A casing according to any preceding claim, wherein said water-soluble cellulose ether is present in an amount of from 2 mg/645 cm$^2$ (100 square inches) to 10 mg/645 cm$^2$ (100 square inches) of coated casing surface.

6. A casing according to any preceding claim, wherein said food grade wax is carnuba wax.

7. A casing according to any preceding claim, wherein said food grade wax is present in an amount of from 5 mg./645 cm$^2$ (100 square inches) to 30 mg./645 cm$^2$ (100 square inches) of coated casing surface.

8. A casing according to any preceding claim, wherein said liquid smoke is present in an amount of from 10 mg/645 cm$^2$ (100 square inches) to 250 mg/645 cm$^2$ (100 square inches) of coated casing surface.

9. A casing according to any preceding claim, wherein said water-soluble cellulose ether is present in an amount of from 2.5 to 8.5 mg/645 cm$^2$ (100 square inches); said food grade wax is present in an amount of from 5 to 30 mg/645 cm$^2$ (100 square inches); and said liquid smoke is present in an amount of from 10 to 250 mg/645 cm$^2$ (100 square inches); all amounts based on said coated casing surface.

10. A solution that enhances the peeling or release characteristics of derivatized or nonderivatized cellulosic food casings comprising a water-soluble cellulose ether, food grade wax, and high carbonyl liquid smoke, wherein when said solution is applied to the inner surface of said casing, said inner surface of said casing is coated with from 2 mg. to 10 mg./645 cm$^2$ (100 square inches) of casing surface of watersoluble cellulose ether, from 5mg. to 30 mg./645 cm$^2$ (100 square inches) of casing surface of food grade wax, and from 10 mg. to 250 mg/645 cm$^2$ (100 square inches) of casing surface of high carbonyl liquid smoke.

European Patent Office

## EUROPEAN SEARCH REPORT

Application Number

EP 01 30 8686

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 077 518 A (UCC) 27 April 1983 (1983-04-27) * page 18, line 16 - line 33 * * page 21, line 14 - page 23, line 2; claims 1-36 * | 1,4 | A22C13/00 |
| X | FR 2 389 543 A (UCC) 1 December 1978 (1978-12-01) * page 4, line 7 - page 6, line 15 * * page 6, line 28 - page 7, line 8; claims 1-13 * | 1 | |
| Y | EP 0 315 965 A (VISKASE CORPORATION) 17 May 1989 (1989-05-17) * claims 1-35 * | 1-10 | |
| D,Y | EP 0 122 386 A (UCC) 24 October 1984 (1984-10-24) * page 11, paragraph 2 - page 12, paragraph 2 * * page 41, paragraph 1 - page 42, paragraph 2 * * page 43, paragraph 4 - page 44, paragraph 1; claims 1-103 * | 1-10 | |
| Y | EP 0 109 611 A (HOECHST AG) 30 May 1984 (1984-05-30) * page 5, line 13 - page 6, line 4 * * page 6, line 30 - page 8, line 19 * * page 11, line 24 - page 13, line 1; claims 1-25 * | 1-10 | TECHNICAL FIELDS SEARCHED (Int.Cl.7) A22C |
| A | EP 1 042 958 A (KALLE NALO GMBH & CO. KG) 11 October 2000 (2000-10-11) * claims 1-10 * | 1 | |

-/--

The present search report has been drawn up for all claims

| Place of search | Date of completion of the search | Examiner |
|---|---|---|
| THE HAGUE | 12 February 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 01 30 8686

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 020 117 A (TEEPAK INVESTMENTS, INC.) 19 July 2000 (2000-07-19) * claims 1-15 * | 1 | |
| A | EP 0 700 637 A (HOECHST AG) 13 March 1996 (1996-03-13) * claims 1-13 * | 1 | |
| A | US 3 360 383 A (H. J. ROSE) 26 December 1967 (1967-12-26) * claims 1-7 * | 1 | |
| A | DE 25 46 681 A (TEEPAK INC.) 22 April 1976 (1976-04-22) * claims 1-7 * | 1,4 | |
| P,X | EP 1 125 504 A (KALLE NALO GMBH & CO. KG) 22 August 2001 (2001-08-22) * the whole document * | 1,6 | |
| X | US 4 594 251 A (M. D. NICHOLSON) 10 June 1986 (1986-06-10) * column 11, line 12 - line 39 * * column 13, line 1 - line 44 * * column 14, line 8 - line 23; claims 1-19 * | 1 | TECHNICAL FIELDS SEARCHED (Int.Cl.7) |

The present search report has been drawn up for all claims

| Place of search | Date of completion of the search | Examiner |
|---|---|---|
| THE HAGUE | 12 February 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**   EP 01 30 8686

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2002

| Patent document cited in search report | | Publication date | Patent family member(s) | | Publication date |
|---|---|---|---|---|---|
| EP 77518 | A | 27-04-1983 | AR | 228991 A1 | 13-05-1983 |
| | | | AT | 13618 T | 15-06-1985 |
| | | | AU | 584748 B2 | 01-06-1989 |
| | | | AU | 6300586 A | 08-01-1987 |
| | | | AU | 590001 B2 | 26-10-1989 |
| | | | AU | 6300686 A | 08-01-1987 |
| | | | AU | 556604 B2 | 13-11-1986 |
| | | | AU | 8939882 A | 21-04-1983 |
| | | | BR | 8206013 A | 13-09-1983 |
| | | | CA | 1195872 A1 | 29-10-1985 |
| | | | CS | 249125 B2 | 12-03-1987 |
| | | | DD | 209567 A5 | 16-05-1984 |
| | | | DD | 226766 A5 | 04-09-1985 |
| | | | DE | 3264068 D1 | 11-07-1985 |
| | | | DK | 458482 A ,B, | 17-04-1983 |
| | | | EP | 0077518 A1 | 27-04-1983 |
| | | | ES | 516483 D0 | 01-01-1984 |
| | | | ES | 8401834 A1 | 01-04-1984 |
| | | | FI | 823536 A ,B, | 17-04-1983 |
| | | | GR | 77356 A1 | 11-09-1984 |
| | | | HU | 186980 B | 28-10-1985 |
| | | | JP | 1673359 C | 12-06-1992 |
| | | | JP | 3039652 B | 14-06-1991 |
| | | | JP | 63032445 A | 12-02-1988 |
| | | | JP | 1043538 B | 21-09-1989 |
| | | | JP | 1558190 C | 16-05-1990 |
| | | | JP | 58094338 A | 04-06-1983 |
| | | | MX | 172818 B | 14-01-1994 |
| | | | MX | 161437 A | 26-09-1990 |
| | | | NO | 823407 A ,B, | 18-04-1983 |
| | | | NO | 863204 A ,B, | 18-04-1983 |
| | | | NO | 863205 A ,B, | 18-04-1983 |
| | | | NZ | 202065 A | 09-05-1986 |
| | | | PL | 238642 A1 | 18-07-1983 |
| | | | PT | 75678 A ,B | 01-11-1982 |
| | | | ZA | 8207278 A | 30-05-1984 |
| | | | US | 4505939 A | 19-03-1985 |
| | | | US | 4532141 A | 30-07-1985 |
| | | | US | 4592918 A | 03-06-1986 |
| FR 2389543 | A | 01-12-1978 | BE | 866739 A1 | 06-11-1978 |
| | | | BR | 7802812 A | 12-12-1978 |
| | | | DE | 2819686 A1 | 09-11-1978 |
| | | | FI | 781425 A | 07-11-1978 |
| | | | FR | 2389543 A1 | 01-12-1978 |
| | | | IT | 1096287 B | 26-08-1985 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 01 30 8686

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2002

| Patent document cited in search report | | Publication date | Patent family member(s) | | Publication date |
|---|---|---|---|---|---|
| FR 2389543 | A | | JP<br>SE | 53137798 A<br>7805190 A | 01-12-1978<br>07-11-1978 |
| EP 315965 | A | 17-05-1989 | US<br>AT<br>CA<br>DE<br>EP<br>FI<br>JP<br>JP<br>JP<br>US | 4889751 A<br>73296 T<br>1329721 A1<br>3869063 D1<br>0315965 A2<br>885134 A ,B,<br>1262748 A<br>2022878 C<br>7040861 B<br>5030464 A | 26-12-1989<br>15-03-1992<br>24-05-1994<br>16-04-1992<br>17-05-1989<br>10-05-1989<br>19-10-1989<br>26-02-1996<br>10-05-1995<br>09-07-1991 |
| EP 122386 | A | 24-10-1984 | US<br>AT<br>AU<br>AU<br>BR<br>CA<br>DE<br>DK<br>DK<br>EP<br>FI<br>JP<br>JP<br>JP<br>NO<br>NO<br>US<br>US | 4540613 A<br>28969 T<br>569489 B2<br>2451884 A<br>8400622 A<br>1213770 A1<br>3465418 D1<br>63684 A<br>171791 A<br>0122386 A1<br>840564 A ,B,<br>1047976 B<br>1583612 C<br>59198935 A<br>840525 A ,B,<br>874638 A ,B,<br>4717576 A<br>4657765 A | 10-09-1985<br>15-09-1987<br>04-02-1988<br>23-08-1984<br>18-09-1984<br>11-11-1986<br>24-09-1987<br>15-08-1984<br>10-10-1991<br>24-10-1984<br>15-08-1984<br>17-10-1989<br>22-10-1990<br>10-11-1984<br>15-08-1984<br>15-08-1984<br>05-01-1988<br>14-04-1987 |
| EP 109611 | A | 30-05-1984 | DE<br>DE<br>AT<br>CA<br>DE<br>EP<br>FI<br>JP<br>JP<br>JP<br>US | 3242655 A1<br>3318804 A1<br>35208 T<br>1208479 A1<br>3377104 D1<br>0109611 A2<br>834202 A ,B,<br>1676612 C<br>3042860 B<br>59098646 A<br>4543282 A | 24-05-1984<br>29-11-1984<br>15-07-1988<br>29-07-1986<br>28-07-1988<br>30-05-1984<br>19-05-1984<br>26-06-1992<br>28-06-1991<br>07-06-1984<br>24-09-1985 |
| EP 1042958 | A | 11-10-2000 | DE | 19916121 A1 | 12-10-2000 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 01 30 8686

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2002

| Patent document cited in search report | | Publication date | Patent family member(s) | | Publication date |
|---|---|---|---|---|---|
| EP 1042958 | A | | EP 1042958 A1 | | 11-10-2000 |
| | | | JP 2000312554 A | | 14-11-2000 |
| EP 1020117 | A | 19-07-2000 | CN 1260368 A | | 19-07-2000 |
| | | | EP 1020117 A1 | | 19-07-2000 |
| | | | JP 2000201617 A | | 25-07-2000 |
| EP 700637 | A | 13-03-1996 | DE 4431992 A1 | | 14-03-1996 |
| | | | AT 201562 T | | 15-06-2001 |
| | | | BR 9503948 A | | 24-09-1996 |
| | | | CA 2157738 A1 | | 09-03-1996 |
| | | | DE 59509300 D1 | | 05-07-2001 |
| | | | DK 700637 T3 | | 17-09-2001 |
| | | | EP 0700637 A1 | | 13-03-1996 |
| | | | ES 2158921 T3 | | 16-09-2001 |
| | | | FI 954170 A | | 09-03-1996 |
| | | | HU 72181 A2 | | 28-03-1996 |
| | | | JP 8107755 A | | 30-04-1996 |
| | | | US 6251449 B1 | | 26-06-2001 |
| US 3360383 | A | 26-12-1967 | NONE | | |
| DE 2546681 | A | 22-04-1976 | AU 8526575 A | | 07-04-1977 |
| | | | BE 834491 A1 | | 02-02-1976 |
| | | | BR 7506779 A | | 17-08-1976 |
| | | | CA 1066123 A1 | | 13-11-1979 |
| | | | DE 2546681 A1 | | 22-04-1976 |
| | | | FI 752889 A ,B, | | 19-04-1976 |
| | | | FR 2330322 A1 | | 03-06-1977 |
| | | | GB 1470726 A | | 21-04-1977 |
| | | | JP 1179056 C | | 30-11-1983 |
| | | | JP 51063962 A | | 02-06-1976 |
| | | | JP 58011175 B | | 01-03-1983 |
| | | | SE 416870 B | | 16-02-1981 |
| | | | SE 7511620 A | | 20-04-1976 |
| EP 1125504 | A | 22-08-2001 | EP 1125504 A1 | | 22-08-2001 |
| | | | US 2002004088 A1 | | 10-01-2002 |
| US 4594251 | A | 10-06-1986 | AT 23248 T | | 15-11-1986 |
| | | | CA 1227690 A1 | | 06-10-1987 |
| | | | DE 3461137 D1 | | 11-12-1986 |
| | | | EP 0121924 A2 | | 17-10-1984 |
| | | | ES 531421 D0 | | 16-07-1985 |
| | | | ES 8604078 A1 | | 01-06-1986 |
| | | | ES 539622 D0 | | 01-11-1985 |

EPO FORM P0459

For more details about this annex : see Official Journal of the European Patent Office, No. 12/82

**ANNEX TO THE EUROPEAN SEARCH REPORT**
**ON EUROPEAN PATENT APPLICATION NO.**

EP 01 30 8686

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2002

| Patent document cited in search report | Publication date | Patent family member(s) | Publication date |
|---|---|---|---|
| US 4594251 A | | ES 8607697 A1 | 16-11-1986 |
| | | FI 844846 A ,B, | 07-12-1984 |
| | | WO 8404023 A1 | 25-10-1984 |
| | | JP 3004173 B | 22-01-1991 |
| | | JP 60500990 T | 04-07-1985 |

EPO FORM P0459

For more details about this annex : see Official Journal of the European Patent Office, No. 12/82